# EUROPÄISCHE PATENTSCHRIFT

(11) **EP 2 590 752 B1**
(45) Veröffentlichungstag und Bekanntmachung des Hinweises auf die Patenterteilung: **20.04.2016**
(21) Anmeldenummer: 11782532.3
(22) Anmeldetag: 11.07.2011
(51) Int. Cl.: B05B 1/00, B08B 3/02, B24C 5/04, F16J 15/04, F16L 19/02

(54) **DÜSENKÖRPER UND GERÄTEKOPF EINES REINIGUNGSGERÄTS MIT EINEM SOLCHEN DÜSENKÖRPER**
NOZZLE BODY AND DEVICE HEAD OF A CLEANING DEVICE COMPRISING SAID TYPE OF NOZZLE BODY
CORPS DE BUSE ET TÊTE D'UN APPAREIL DE NETTOYAGE MUNI D'UN TEL CORPS DE BUSE

(30) Priorität: 09.07.2010 DE 102010026720
(43) Veröffentlichungstag der Anmeldung: 15.05.2013
(73) Patentinhaber: Steinicke, Emilia, 63694 Limeshain (DE)
(72) Erfinder: Steinicke, Emilia, 63694 Limeshain (DE)
(74) Vertreter: Hebing, Norbert
(86) Internationale Anmeldenummer: PCT/DE2011/001446
(87) Internationale Veröffentlichungsnummer: WO 2012/022289

(56) Entgegenhaltungen:
- EP-A1- 1 323 479
- FR-A- 1 052 837
- US-A- 3 228 147
- US-A- 3 719 009
- US-A1- 2002 195 752

## Beschreibung

Die Erfindung bezieht sich auf einen Düsenkörper mit einem Düsenkopf, der an einer vorderen Stirnfläche des Düsenkörpers beginnt, und einem sich an den Düsenkopf anschließenden Schaft, der in einer hinteren Stirnfläche des Düsenkörpers endet, wobei die äußere Mantelfläche des Schaftes mit einem Gewinde versehen ist und der Düsenkopf so ausgebildet ist, dass ein Drehwerkzeug angesetzt werden kann, um den Düsenkörper in ein Gewindeloch des Gerätekopfes eines Reinigungsgerätes einschrauben zu können, und wobei durch den Düsenkörper ein Längskanal verläuft, der mit seinen beiden Enden in die Stirnflächen einmündet.

Ein derartiger Düsenkörper ist in der DE 20 2009 000 402 U1 beschrieben. Der Längskanal bildet einen Düsenkanal und ist an der Innenseite mit Führungsrippen zur Strömungsstabilisation versehen, die einstückig mit dem Düsenkörper ausgebildet sind.

Des Weiteren ist schon vorgeschlagen worden, in den Längskanal des Düsenkörpers einen hülsenförmigen Keramikeinsatz mit einem dazu konzentrischen Längskanal einzusetzen, der die Wandung des Längskanals des Düsenkörpers in einem Teilabschnitt abdeckt. Der nicht abgedeckte Abschnitt des Längskanals im Düsenkörper und der Längskanal des Keramikeinsatzes bilden einen durchgehenden Düsenkanal. Diese Maßnahme hat sich insbesondere bei einem Einsatz des Düsenkörpers in einem Kanalreinigungsgerät als notwendig erwiesen, weil das mit hohem Druck durch den Düsenkanal strömende Spülwasser mit abrasiven Teilchen versetzt ist, die einen vollständig aus Stahl gefertigten Düsenkörper schnell zerstören würden. Des Weiteren konnte festgestellt werden, dass das Spülwasser den Düsenkörper hinterspült und sein Gewinde beschädigt.

Dokument EP 1 323 479 A1 offenbart einen Düsenkörper nach dem Oberbegriff des Anspruchs 1.

Die Erfindung beruht auf dem Problem, einen Düsenkörper zu schaffen, der so gestaltet ist, dass er passgenau in ein Gewindeloch im Gerätekopf eines Reinigungsgeräts einsetzbar ist, und zwar derart, dass ein im Düsenkörper eingesetzter Keramikeinsatz dort sicher gehalten ist und Verwirbelungen des Spülwassers möglichst unterbunden werden. Außerdem soll erreicht werden, dass das Spülwasser nicht in den Bereich zwischen der äußeren Mantelfläche des Düsenkörpers und der inneren Mantelfläche des Gewindeloches gelangt.

Zur Lösung der Aufgabe sieht die Erfindung vor, dass im Längskanal des Düsenkörpers eine zur hinteren Stirnfläche weisende Ringfläche ausgebildet ist und dass im Längskanal des Düsenkörpers ein Keramikeinsatz mit einem dazu konzentrischen Längskanal eingesetzt ist, der an der Ringfläche anliegt, wobei das hintere Ende des Schaftes über den eingesetzten Keramikeinsatz hinausragt und einen umbördelbaren Rand bildet.

Bei dieser Ausgestaltung wird der Keramikeinsatz in den Schaft des Düsenkörpers eingesetzt. Sodann wird der Düsenkörper in ein Gewindeloch eingeschraubt, wobei der rückwärtige Rand des Schaftes zunächst am Boden des Gewindeloches zur Anlage gelangt. Wird der Düsenkörper nun weiter in das Gewindeloch eingeschraubt, wird der Rand am Boden umgebördelt und nach innen gefaltet, wodurch er sich an den Keramikeinsatz anlegt und diesen im Düsenkörper hält. Da ein Teil der Druckkräfte dabei nicht in den Keramikeinsatz, sondern in den Schaft des Düsenkörpers eingeleitet werden, ist die Gefahr, dass der Keramikeinsatz beschädigt wird, gering. Gleichzeitig bildet der umgebördelte Rand eine Dichtung zwischen dem Keramikeinsatz und dem Boden des Gewindeloches, die verhindert, dass Spülwasser zur Außenseite des Düsenkörpers gelangt.

Ein eventuell zunächst verbleibender kleiner Spalt von wenigen hundertstel mm zwischen dem Bördelrand und dem Boden des Gewindeloches wird durch ein Nachziehen des Düsenkörpers immer kleiner, so dass der Spalt praktisch verschwindet und sich die Stirnfläche des Keramikeinsatzes an den Boden des Gewindeloches anlegt. Durch den Flächenkontakt wird eine zusätzliche Dichtwirkung erzielt, so dass das unter Druck stehende Spülwasser nicht zum Gewinde gelangen kann.

Um die Umbördelung zu erleichtern, kann der Rand einen Konus bilden, wobei die Außenseite des Randes zur hinteren Stirnfläche des Düsenkörpers hin konisch zuläuft. Vorzugsweise verläuft die innere Mantelfläche des Randes in einer geraden Verlängerung der Mantelfläche des Längskanals im Schaft.

Der Konus kann in zwei Stufen ausgeführt werden. So kann beispielsweise der Neigungswinkel gegenüber einer Senkrechten zur Längsachse des Düsenkörpers von der Spitze beginnend zunächst bei 15° und danach bei 45° liegen.

Der Düsenkörper kann besonders leicht hergestellt werden, wenn der Längskanal im Bereich des Schaftes zylindrisch verläuft und die Ringfläche senkrecht zur Längsachse verläuft, dementsprechend besitzt auch der Düsenkörper eine zylindrische Form mit senkrecht zur Achse verlaufenden hinteren und vorderen Stirnflächen.

Vorzugsweise erstreckt sich das Gewinde nicht über die gesamte Länge des Schaftes, vielmehr wird der hintere Teil vom Gewinde freigehalten; das Gewinde beginnt somit im Abstand zur rückwärtigen Stirnfläche. Dies ermöglicht eine leichte Einführung des Düsenkörpers in das Gewindeloch, wobei der Schaft zum Gewindeloch ausgerichtet wird. Mit dem Einschrauben wird erst begonnen, wenn der Schaft des Düsenkörpers ausgerichtet im Gewindeloch steckt. Dadurch wird vermieden, dass sich das Gewinde beim Einschrauben verkantet.

In ähnlicher Weise kann auch das Innengewinde im Gewindeloch erst im Abstand von der Einmündung des Gewindeloches in der Geräteoberfläche beginnen, so dass im Anschluss an die Einmündung zunächst eine glatte zylindrische Fläche vorliegt, die z. B. durch ein Aufbohren des Innengewindes mit einem Durchmesser erzeugt wurde, der dem Gewindeaußendurchmesser entspricht. Durch diese Maßnahme wird der 1. Gewindegang des Gewindes gegen Anstauchen beim Einsetzen des Düsenkörpers geschützt.

Die Erfindung bezieht sich weiterhin auf den Gerätekopf eines Reinigungsgerätes mit einem Gewindeloch zur Aufnahme eines Düsenkörpers und mit einer planen Bodenfläche, in die ein Gerätekanal zum Zuführen von Spülwasser endet. In einen derartigen Gerätekopf wird ein zuvor beschriebener Düsenkörper eingeschraubt, wobei die Tiefe des Gewindeloches kleiner ist als die Länge des Schaftes, so dass beim Einschrauben der Rand des Schaftes an der Bodenfläche wie oben beschrieben umgebördelt werden kann und er sich dichtend zwischen die Stirnfläche des Keramikeinsatzes und die Bodenfläche legt, wobei die Dichtwirkung sowohl durch die Umbördelung als auch durch den Flächenkontakt zwischen der rückwärtigen Stirnseite des Keramikeinsatzes und der Bodenfläche des Gewindeloches entsteht.

Damit der Übergang zwischen dem Keramikeinsatz und dem Gerätekanal möglichst glatt ist, ist der Durchmesser des Gerätekanals zumindest am Übergang dem Durchmesser des Längskanals im Keramikeinsatz angepasst.

Die Erfindung liefert somit einen leicht herzustellenden Düsenkörper, der durch die Verwendung eines Keramikeinsatzes lange haltbar ist. Durch die Abdichtung zwischen dem Keramikeinsatz und dem Gerät wird das Gewinde nicht hinterspült, was ebenfalls die Haltbarkeit erhöht.

Die Form des Längskanals im Keramikeinsatz sowie des Längskanals im Düsenkopf des Düsenkörpers kann beliebig gewählt werden. So kann sich z. B. der Längskanal im Keramikeinsatz zum Gerätekanal hin konisch erweitern. Es ist dabei darauf zu achten, dass die Übergänge zwischen den einzelnen Kanälen stets stufenfrei erfolgen.

Die Form des Längskanals im Düsenkopf des Düsenkörpers wird im Allgemeinen zylindrisch sein. Zur Strahlformung kann aber auch jede andere symmetrische oder asymmetrische Querschnittsform gewählt werden, wie z. B. eine Y-Form. Diese und andere Querschnittsformen sind in der DE 103 21 432 A1 beschrieben.

Im Folgenden wird anhand eines Ausführungsbeispiels die Erfindung näher verdeutlicht. Dazu zeigen:
- Fig. 1: einen Längsschnitt durch einen erfindungsgemäßen Düsenkörper,
- Fig. 2: eine Detaildarstellung des hinteren Randes des Düsenkörpers und
- Fig. 3: den in einen Gerätekopf eingeschraubten Düsenkörper.

Der Düsenkörper 1 besteht aus einem Düsenkopf 2 und einem Schaft 3 und ist bezogen auf seine Längsachse rotationssymmetrisch aufgebaut. Eine vordere Stirnfläche 2a des Düsenkörpers 1 befindet sich am Düsenkopf 2 und eine hintere Stirnfläche 3a am Schaft. Lediglich der Düsenkopf 2 weicht von der Rotationsform ab, er ist nämlich mit einer Sechskantfläche versehen, um einen Schraubenschlüssel ansetzen zu können.

An der äußeren Mantelfläche des Schaftes 3 befindet sich ein Gewinde 4, und zwar im Bereich nahe dem Düsenkopf 2. Der Bereich am rückwärtigen Ende des Schaftes 3 ist gewindefrei und dient als Einführungsbereich 5.

Der Düsenkörper 1 ist mit einem Längskanal 6 versehen, der mit einer Stufe versehen ist. Im Bereich des Schaftes besitzt der Längskanal einen größeren Durchmesser als im Bereich des Düsenkopfes. Im Bereich des Düsenkopfes dient der Längskanal 6 als Düsenkanal. Im Bereich des Schaftes ist im Längskanal 6 ein Keramikeinsatz 7 eingesetzt, der eine zylindrische Außenform besitzt und passgenau eingefügt und verklebt ist.

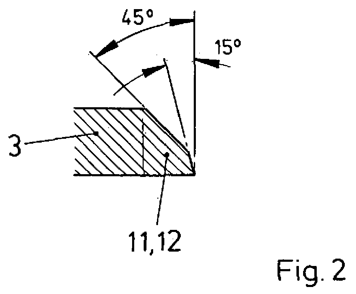

Die vordere Stirnfläche 2a des Keramikeinsatzes liegt an einer die Stufe formenden Ringfläche 8 zwischen den beiden durchmesserverschiedenen Abschnitten des Längskanals 6 an, wobei die Verklebung des Keramikeinsatzes auch an der Ringfläche 8 erfolgt. Der Keramikeinsatz 7 besitzt in diesem Ausführungsbeispiel einen nach hinten sich erweiternden Längskanal 9, der mit dem Abschnitt des Längskanals 6 im Düsenkopf fluchtet und mit diesem einen Düsenkanal 10 bildet. Im eingesetzten Zustand, bei dem der Keramikeinsatz 7 an der Ringfläche 8 anliegt, ragt das hintere Ende des Schaftes 3 ein wenig, vorzugsweise nur 1/10 mm, über die Stirnfläche des Keramikeinsatzes 7 hinaus, wobei die äußere Mantelfläche des Schaftes 3 in diesem Bereich, wie in Fig. 2 gezeigt, einen zweistufigen Konus 11 bildet und damit einen umbördelbaren Rand 12. Der Neigungswinkel der Konusflächen beträgt im Anschluss an die hintere Stirnfläche 15° und daran anschließend 45° Grad, jeweils bezogen auf eine Senkrechte zur Längsachse des Düsenkörpers 1. Die Innenseite des Konus 11 ist eine gerade Verlängerung der inneren Mantelfläche des Längskanals 6 im Schaft 3.

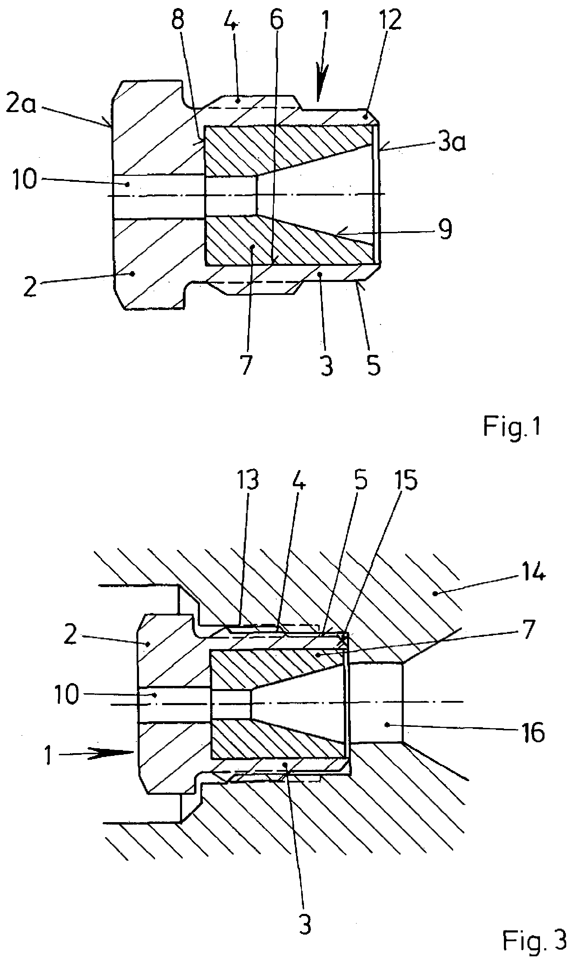

Wie der Fig. 3 zu entnehmen ist, lässt sich der Düsenkörper 1 in ein Gewindeloch 13 des Gerätekopfes 14 eines Reinigungsgerätes einschrauben, wobei das Gewindeloch 13 eine plane Bodenfläche 15 aufweist, in deren Zentrum ein Gerätekanal 16 einmündet.

Das Gewindeloch 13 besitzt ein Innengewinde, das im Abstand von der Einmündung des Gewindeloches 13 in der Geräteoberfläche endet, so dass ein gewindefreier Abschnitt im Anschluss an die Einmündung vorliegt, die eine zylindrische Oberfläche hat und als Führungsfläche beim Einsetzen des Düsenkörpers 1 dient.

Gemäß der Darstellung ist der Düsenkörper 1 soweit eingeschraubt, dass sein rückwärtiger Rand gerade an der Bodenfläche 15 anliegt. Schraubt man den Düsenkörper 1 weiter ein, wird der Rand nach innen umgebördelt, wobei er einerseits an der rückwärtigen Stirnfläche des Keramikeinsatzes 7 anliegt und damit den Keramikeinsatz 7 im Düsenkörper 1 hält und andererseits eine Dichtung bildet, die den Übergang zwischen dem Gerätekanal 16 und dem Düsenkanal 10 gegenüber dem Gewindeloch 13 abdichtet. Da der Überhang des Randes gegenüber dem Keramikeinsatz 7 nur gering ist, kann der Keramikeinsatz trotz der Umbördelung gegen die Bodenfläche 15 gedrückt werden, so dass eine weitere Dichtwirkung entsteht.

Wie der Fig. 3 weiter zu entnehmen ist, sind die Übergänge zwischen den genannten Kanälen 10, 16 stufenfrei, scharfkantig und geglättet, so dass keine Verwirbelungen im strömenden Spülwasser entstehen.

Der Düsenkörper eignet sich besonders zum Einsatz in Kanalreinigungsgeräten mit einem Gerätekopf, auf dessen Umfang Düsenkörper gleichmäßig verteilt eingesetzt sind. Die Strahlaustrittsrichtungen der Düsenkörper sind dabei windschief zur Längsachse des Geräts ausgerichtet, wobei der Winkel der Strahlaustrittsrichtung zur Längsachse des Gerätekopfes so gewählt ist, dass sich einerseits ein Vortrieb durch den Strahldruck ergibt und andererseits die zu reinigenden Kanalwände noch mit einem genügend hohen Druck erreicht werden. Der Abstand der Strahlaustrittsrichtung zur Längsachse des Geräts (als Maß für die Windschiefe) wird so gewählt, dass die Kanalwände seitlich schräg mit einer Komponente in Tangentialrichtung getroffen werden, was die Reinigungswirkung erhöht. Außerdem kann die Tangentialkomponente des Strahls genutzt werden, um den Gerätekopf in Rotation um seine Längsachse zu versetzen. Dazu ist es aber um seine Längsachse drehbar auf einem Schlitten zu lagern.

### Bezugszeichenliste

- 1: Düsenkörper
- 2: Düsenkopf
- 2a: Stirnfläche
- 3: Schaft
- 3a: Stirnfläche
- 4: Gewinde
- 5: Einführungsbereich
- 6: Längskanal
- 7: Keramikeinsatz
- 8: Ringfläche
- 9: Längskanal
- 10: Düsenkanal
- 11: Konus
- 12: Rand
- 13: Gewindeloch
- 14: Gerätekopf
- 15: Bodenfläche
- 16: Gerätekanal

## Patentansprüche

1. Düsenkörper mit einem Düsenkopf (2), der an einer vorderen Stirnfläche (2a) des Düsenkörpers (1) beginnt, und einem sich an den Düsenkopf (2) anschließenden Schaft (3), der in einer hinteren Stirnfläche (3a) des Düsenkörpers (1) endet, wobei die äußere Mantelfläche des Schaftes (3) mit einem Gewinde (4) versehen ist und der Düsenkopf (2) so ausgebildet ist, dass ein Drehwerkzeug angesetzt werden kann, um den Düsenkörper (1) in ein Gewindeloch (13) des Gerätekopfes (14) eines Reinigungsgerätes einschrauben zu können, und wobei durch den Düsenkörper (1) ein Längskanal (6) verläuft, der mit seinen beiden Enden in die Stirnflächen (2a, 3a) einmündet, wobei im Längskanal (6) des Düsenkörpers (1) eine Ringfläche (8) ausgebildet ist und im Längskanal (6) des Düsenkörpers (1) ein Keramikeinsatz (7) mit einem dazu konzentrischen Längskanal (9) eingesetzt ist, der an der Ringfläche (8) anliegt, **dadurch gekennzeichnet, dass** die Ringfläche (8) zur hinteren Stirnfläche (3a) am Schaft (3) weist und dass das hintere Ende des Schaftes (3) über den eingesetzten Keramikeinsatz (7) hinausragt und einen umbördelbaren Rand (12) bildet.

2. Düsenkörper nach Anspruch 1, **dadurch gekennzeichnet, dass** der Rand (12) von einem Konus (11) gebildet wird, wobei die Außenseite des Randes (12) zur hinteren Stirnfläche des Düsenkörpers (1) hin konisch zuläuft.

3. Düsenkörper nach Anspruch 2, **dadurch gekennzeichnet, dass** die Außenseite des Randes (12) in wenigstens zwei unterschiedlichen Neigungswinkeln zur hinteren Stirnfläche des Düsenkörpers (1) konisch zuläuft.

4. Düsenkörper nach Anspruch 2, **dadurch gekennzeichnet, dass** der Längskanal (6) im Bereich des Schaftes (3) zylindrisch verläuft und die Ringfläche (8) senkrecht zur Längsachse verläuft, und dass der Düsenkörper (1) eine zylindrische Form besitzt mit senkrecht zur Achse verlaufenden hinteren und vorderen Stirnflächen (2a, 3a).

5. Düsenkörper nach Anspruch 1, **dadurch gekennzeichnet, dass** das Gewinde (4) im Abstand zur rückwärtigen Stirnfläche (3a) des Düsenkörpers (1) beginnt, so dass am hinteren Ende der Mantelfläche des Düsenkörpers (1) ein gewindefreier Einführungsbereich (5) vorliegt.

6. Gerätekopf eines Reinigungsgerätes mit einem Gewindeloch (13) zur Aufnahme eines Düsenkörpers (1) gemäß einem der vorhergehenden Ansprüche, wobei das Gewindeloch (13) eine plane Bodenfläche (15) aufweist, in die ein Gerätekanal (16) endet, **dadurch gekennzeichnet, dass** der Schaft (3) des Düsenkörpers (1) länger ist als das Gewindeloch (13) des Gerätekopfes (14) tief.

7. Gerätekopf nach Anspruch 6 , **dadurch gekennzeichnet, dass** am Übergang des Gerätekanals (16) zum Längskanal (9) im Keramikeinsatz (7) die Durchmesser der Kanäle (16, 9) gleich groß sind.

8. Gerätekopf nach Anspruch 6 oder 7, **dadurch gekennzeichnet, dass** das Innengewinde im Gewindeloch (13) im Abstand zur Einmündung des Gewindeloches (13) in der Geräteoberfläche beginnt, so dass im Anschluss an die Einmündung eine gewindefreie Führungsfläche vorliegt.

## Claims

1. A nozzle body with a nozzle head (2), which starts at a forward end face (2a) of the nozzle body (1), and a shaft (3) adjoining the nozzle head (2), which ends in a rear end face (3a) of the nozzle body (1), wherein the outer surface of the shaft (3) is provided with a thread (4) and the nozzle head (2) is designed such that a turning tool can be set in position such that the nozzle body (1) can be screwed into a threaded hole (13) of the device head (14) of a cleaning device, and wherein a longitudinal channel (6) runs through the nozzle body (1); the two ends of the channel open out into the end faces (2a, 3a), wherein an annular face (8) is formed in the longitudinal channel (6) of the nozzle body (1), and a ceramic insert (7) with a concentric longitudinal channel (9) is inserted in the longitudinal channel (6) of the nozzle body (1), which insert fits against the annular face (8), **characterised in that** the,annular face (8) points towards the rear end face (3a) on the shaft (3), and **in that** the rear end of the shaft (3) projects beyond the inserted ceramic insert (7), and forms an edge (12) that can be flanged.

2. The nozzle body in accordance with claim 1, **characterised in that** the edge (12) is formed as a cone (11), wherein the outer face of the edge (12) runs conically up to the rear end face of the nozzle body (1).

3. The nozzle body in accordance with claim 2, **characterised in that** the outer face of the edge (12) runs conically with at least two different angles of inclination up to the rear end face of the nozzle body (1).

4. The nozzle body in accordance with claim 2, **characterised in that** the longitudinal channel (6) runs cylindrically in the region of the shaft (3), and the annular face (8) runs at right angles to the longitudinal axis, and **in that** the nozzle body (1) possesses a cylindrical shape with rear and front end faces (2a, 3a) running at right angles to the axis.

5. The nozzle body in accordance with claim 1, **characterised in that** the thread (4) starts at a distance from the rear end face (3a) of the nozzle body (1), so that a non-threaded introductory region (5) is present at the rear end of the outer surface of the nozzle body (1).

6. A device head of a cleaning device with a threaded hole (13) for purposes of receiving a nozzle body (1) in accordance with one of the preceding claims, wherein the threaded hole (13) has a planar base surface (15), in which a device channel (16) ends, **characterised in that** the shaft (3) of the nozzle body (1) is longer than the depth of the threaded hole (13) of the device head (14).

7. The device head in accordance with claim 6, **characterised in that** at the transition from the device channel (16) to the longitudinal channel (9) in the ceramic insert (7) the diameters of the channels (16, 9) are of equal size.

8. The device head in accordance with claim 6 or 7, **characterised in that** the internal thread in the threaded hole (13) starts in the device surface at a distance from the mouth of the threaded hole (13), so that subsequent to the mouth a non-threaded guiding surface is present.

## Revendications

1. Corps de buse comprenant une tête de buse (2), qui commence sur une face frontale avant (2a) du corps de buse (1), et un arbre (3) se raccordant sur la tête de buse (2) qui termine dans une face frontale arrière (3a) du corps de buse (1), sachant que la surface d'enveloppe extérieure de l'arbre (3) est dotée d'un filet (4) et la tête de buse (2) est ainsi formée qu'un outil rotatif peut être posé pour pouvoir visser le corps de buse (1) dans un trou fileté (13) de la tête d'appareil (14) d'un appareil de nettoyage, et sachant qu'un canal longitudinal (6) passe à travers le corps de buse (1), lequel débouche dans les faces frontales (2a, 3a) par ses deux extrémités, sachant qu'une surface annulaire (8) est formée dans le canal longitudinal (6) du corps de buse (1) et un insert céramique (7) avec un canal longitudinal (9) concentrique à celui-ci est inséré dans le canal longitudinal (6) du corps de buse (1), lequel repose sur la surface annulaire (8), **caractérisé en ce que** la surface annulaire (8) est orientée en direction de la face frontale arrière (3a) sur l'arbre (3) et que l'extrémité arrière de l'arbre (3) fait saillie au-dessus de l'insert céramique (7) inséré et forme un bord (12) pouvant être bordé.

2. Corps de buse selon la revendication 1, **caractérisé en ce que** le bord (12) est formé par un cône (11), sachant que le côté extérieur du bord (12) est conique en direction de la face frontale arrière du corps de buse (1).

3. Corps de buse selon la revendication 2, **caractérisé en ce que** le côté extérieur du bord (12) est conique dans au moins deux angles d'inclinaison différents en direction de la face frontale arrière du corps de buse (1).

4. Corps de buse selon la revendication 2, **caractérisé en ce que** le canal longitudinal (6) est cylindrique au niveau de l'arbre (3) et la surface annulaire (8) est perpendiculaire à l'axe longitudinal, et que le corps de buse (1) a une forme cylindrique avec des faces frontales arrière et avant (2a, 3a) perpendiculaires à l'axe.

5. Corps de buse selon la revendication 1, **caractérisé en ce que** le filet (4) commence à distance de la face frontale vers l'arrière (3a) du corps de buse (1) de sorte qu'une zone d'introduction (5) non filetée est présente sur l'extrémité arrière de la surface d'enveloppe du corps de buse (1).

6. Tête de nettoyage d'un appareil de nettoyage comprenant un trou fileté (13) destiné à recevoir un corps de buse (1) selon l'une des revendications précédentes, sachant que le trou fileté (13) présente un fond plat (15) dans lequel termine un canal d'appareil (16), **caractérisé en ce que** l'arbre (3) du corps de buse (1) est plus long que le trou fileté (13) de la tête d'appareil (14) n'est profond.

7. Tête de nettoyage selon la revendication 6, **caractérisée en ce que** sur le passage du canal d'appareil (16) au canal longitudinal (9) dans l'insert céramique (7), les diamètres des canaux (16, 9) sont égaux.

8. Tête de nettoyage selon la revendication 6 ou 7, **caractérisée en ce que** le filet femelle dans le trou fileté (13) commence à distance de l'embouchure du trou fileté (13) dans la surface de l'appareil, de telle sorte qu'une surface de guidage non filetée est présente dans le raccordement sur l'embouchure.
